(19) Europäisches Patentamt
European Patent Office
Office européen des brevets

(11) EP 0 620 257 B1

(12) **EUROPEAN PATENT SPECIFICATION**

(45) Date of publication and mention of the grant of the patent:
**03.09.1997 Bulletin 1997/36**

(51) Int Cl.[6]: **C09J 123/18**, C09J 7/02, C08K 5/00

(21) Application number: **94105638.4**

(22) Date of filing: **12.04.1994**

# (54) Radiation-curable poly(alpha-olefin) adhesives

Durch Strahlung härtbare Klebstoffe auf Basis von Poly(alpha-olefin)

Adhésif à base de polymères d'alphaoléfines durcissables par rayonnement

(84) Designated Contracting States:
**DE ES FR GB IT**

(30) Priority: **13.04.1993 US 46235**

(43) Date of publication of application:
**19.10.1994 Bulletin 1994/42**

(73) Proprietor: **MINNESOTA MINING AND MANUFACTURING COMPANY**
**St. Paul, Minnesota 55133-3427 (US)**

(72) Inventors:
- **Babu, Gaddam N., c/o Minnesota Mining and St. Paul, Minnesota 55133-3427 (US)**
- **Peterson, James R., c/o Minnesota Mining and St. Paul, Minnesota 55133-3427 (US)**
- **Bennett, Eric R., c/o Minnesota Mining and St. Paul, Minnesota 55133-3427 (US)**

(74) Representative: **VOSSIUS & PARTNER**
**Postfach 86 07 67**
**81634 München (DE)**

(56) References cited:
**EP-A- 0 003 194** **US-A- 5 112 882**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

This invention relates to radiation curable poly(α-olefin) compositions providing adhesives having a superior balance of peel adhesion and cohesive strength at both ambient and elevated temperatures.

A continuing need in the pressure-sensitive adhesive (PSA) art is the achievement of better control over various mechanical and process properties so that adhesives can be made specifically for highly demanding end use applications such as packaging, medical, and masking tapes. These applications require a proper balance of properties that changes with the particular end use.

Among the earliest polymers to provide a reasonable balance of the properties required for satisfactory PSA performance were the natural and synthetic rubbers. However, these PSAs had poor aging properties, and the art quickly recognized the need to eliminate ethylenically unsaturated groups from the polymer backbone of rubber adhesives in order to improve their oxidative stability.

The discovery of Ziegler-Natta (ZN) catalysts made possible polymerization of α-olefin monomers to high molecular weights. The homopolymers of the $C_6$-$C_{10}$ α-olefins were naturally tacky and also had low toxicity, good aging and favorable environmental stability (i.e., low oxidation). These homopolymers were chemically inert, resistant to plasticizer migration, and relatively inexpensive. However, they had poor cohesive strength and therefore, lacked the shear adhesion necessary for high performance PSAs. Use of ZN catalysts to make homopolymers from α-olefin monomers and to make copolymers from mixtures of α-olefin and nonconjugated polyene monomers is known in the art and is succinctly summarized in Odian, G., "Principles of Polymerization", Ch. 8.4 (Second Edition J. Wiley & Sons, New York, 1981). For a more detailed discussion of the polymerization of α-olefins, see Boor, J., "Ziegler-Natta Catalysts and Polymerizations", Ch. 19 (Academic Press, NY, 1979).

Adhesives derived primarily from $C_6$ or higher α-olefins are also known. U.S. Patent No. 3,542,717 describes poly (α-olefin) adhesive compositions comprising mixtures of polyolefin copolymers derived from olefin monomers with different molecular weights (i.e., copolymers from one α-olefin monomer having 11 to 20 carbon atoms and another having 4 to 20 carbon atoms.)

U.S. Patent No. 3,635,755 describes polyolefin PSAs suitable for use as a single component PSA for surgical tapes that are substantially non-allergenic. Such adhesives can be made from homopolymers of the $C_6$ to $C_{11}$ α-olefins or from interpolymers of $C_2$ to $C_{16}$ α-olefins having an intrinsic viscosity of 1.5 to 7.0, a Williams plasticity of 0.8 to 4.0, and an acetone/heptane soluble fraction of less than 25% by weight. This patent does not teach radiation curing of these poly-olefin compounds.

U.S. Patent Nos. 3,954,697 and 4,072,812 describe hot melt adhesives based respectively on propylene/$C_6$-$C_{10}$ 1-olefins wherein the $C_6$-$C_{10}$ 1-olefins comprise 40 to 60 mole percent of the composition and 1-butene/$C_6$-$C_{10}$ 1-olefins wherein the $C_6$-$C_{10}$ 1-olefins comprise 40 to 60 mole percent of the composition. These compositions have no detectable crystallinity by differential scanning calorimetry. These two patents also teach that copolymers containing only minor amounts of propylene or butylene (e.g. 5 to 20 wt%) are permanently tacky. Moreover, they teach that copolymers containing only minor amounts of propylene or butylene have little static shear and fail in the static shear test after less than 100 minutes. In addition, neither teaches the use of polyene monomers.

U.S. Patent No. 4,178,272 describes hot melt adhesives based on a blend of poly(propylene-co-higher 1-olefin) containing 35 to 65 mole percent higher 1-olefins. A tackifying resin and crystalline polypropylene are added. Without the crystalline polypropylene homopolymer, the adhesive exhibits excessive creep under load.

U.S. Patent No. 4,259,470 describes hot melt adhesives containing propylene, 1-butene or 1-pentene and 3 to 14 mole percent of at least one $C_6$-$C_{10}$ linear α-olefin. Tackifying resins and plasticizing oils are added to the hot-melt compositions.

U.S. Patent No. 4,288,358 describes hot-melt adhesive compositions containing terpolymers of 10 to 55 mole percent propylene, 15 to 60 mole percent 1-butene or 1-pentene, and 5 to 39 mole percent higher 1-olefins, i.e., $C_6$-$C_{10}$ α-olefins. Tackifying resins and plasticizing oils are added to the hot-melt compositions.

U.S. Patent No. 5,112,882 describes a radiation curable poly(α-olefin)-containing adhesive composition that is pressure sensitive at room temperature which upon cure yields an adhesive film having superior balance of peel and shear adhesion. The adhesive composition comprises (a) $C_6$-$C_{10}$ α-olefin monomer(s) and 0 to 15 mole percent polyene monomers and (b) sufficient photoactive crosslinking agent to crosslink the composition upon irradiation. The radiation must be of sufficient energy to generate free radicals so as to crosslink the composition.

The present invention provides radiation curable poly(α-olefin) adhesive compositions which can be crosslinked to produce adhesive films having a superior balance of peel adhesion and cohesive strength at elevated temperatures comprising:

1) a saturated α-olefin polymer comprising the polymerization product of from 80 to 99 mole percent, preferably from 85 to 99 mole percent, of one or more $C_6$-$C_{10}$ α-olefin monomers and from 1 to 20 mole percent, preferably from 1 to 15 mole percent, of one or more $C_2$-$C_5$ α-olefin monomers; and

2) 0.01 to 6.0 % by weight of photoactive crosslinking agent to crosslink the composition upon irradiation from a source of actinic radiation.

The present invention also provides a method of preparing a crosslinked copolymer comprising the steps:

a) polymerizing an admixture comprising one or more $C_6$-$C_{10}$ α-olefin monomers and one or more $C_2$-$C_5$ α-olefin monomers; and
b) adding 0.01 to 6.0% by weight of a photoactive crosslinking agent and subjecting the above copolymer to radiation to provide a copolymer that comprises 80 to 99 mole percent $C_6$-$C_{10}$ α-olefin repeating units and 1 to 20 mole percent $C_2$-$C_5$ α-olefin repeating units.

Compositions with improved PSA properties may be obtained by blending two or more polymers of the invention or by blending one or more polymers with tackifying resins, preferably 1 to 150 pbw tackifying resin per 100 pbw polymer.

The adhesives of the present invention can be applied to appropriate substrate surfaces by a wide range of processes, i.e., solution coating, solution spraying, hot-melt extrusion, emulsion coating, etc., to make adhesive tapes, adhesive transfer films, and the like.

Unless otherwise indicated, the following definitions apply to this invention:

"$C_6$-$C_{10}$ α-olefin monomer" means a linear or branched organic compound having 6 to 10 carbon atoms and one terminal ethylenically-unsaturated group and no other functional group;
"polymer" means a homopolymer or a polymer, either random or block, derived from more than one monomer (e. g., copolymer, terpolymer, tetrapolymer, etc.);
"photoactive crosslinking agent" means a compound which, under the influence of suitable actinic radiation, initiates free radical formation and subsequent interchain crosslinking and which may or may not become incorporated therein, thus increasing the cohesive strength of the adhesive.

The radiation curable α-olefin polymer of the present invention preferably have a hydrocarbyl backbone of the general formula:

$$(M^1)_x\text{-}(M^2)_y \qquad \text{I}$$

wherein

x and y are numbers designating the relative molar amounts of $M^1$ and $M^2$ that are randomly located in the backbone chain of the polymer such that the polymer has a weight average molecular weight of at least 150,000, x being 80 to 99 mole percent of the sum (x+y) and y being 1 to 20 mole percent of the sum (x+y);
$M^1$ is an ethanediyl repeating unit, having a pendant hydrocarbyl group of 4 to 8 carbons;
$M^2$ is an ethanediyl repeating unit different from $M^1$, selected from ethylene or units having a pendant hydrocarbyl group selected from linear and branched alkyl groups having 1 to 3 carbon atoms.

Most preferably, the novel radiation curable α-olefin polymers of the present invention have the general formula

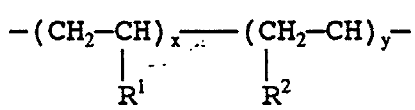

wherein

$R^1$ is an alkyl group having 4 to 8 carbon atoms, preferably about 4 to 6 carbon atoms;
$R^2$ is hydrogen or a hydrocarbyl group selected from alkyl groups having 1 to 3 carbon atoms;
x and y are numbers designating the relative molar amounts of monomer units randomly located in the backbone chain of the polymer such that the polymer has a weight average molecular weight of at least 150,000, x is at least 80 to 99 mole percent of the sum of (x+y) and y is at least 1 to 20 mole percent of the sum of (x+y).

Suitable $C_6$-$C_{10}$ α-olefin monomers can be linear or branched. Examples include but are not limited to 1-hexene, 1-heptene, 1-octene, 1-nonene, 1-decene, 2-methyl-1-pentene, 4-methyl-1-pentene, 5-methyl-1-hexene, 6-methyl-1-heptene, 5-methyl-1-heptene, and 2-methyl-1-heptene.

The α-olefin polymers of the present invention can be either random co-, ter-, or tetra-polymers and preferably have a glass transition temperature ($T_g$) in the range of about -70°C to about 0°C, more preferably in the range of about -60°C to about -20°C. In addition, the saturated polymers of the present invention preferably have an inherent viscosity ("IV") in the range of about 0.7 to about 9.0 dl/g, more preferably in the range from about 1.5 to about 6.0 dl/g, at a concentration of 0.5 g/dl in toluene at 25°C. The number average molecular weights of the polymers are in the range of about 150,000 to about 50,000,000, preferably in the range of about 750,000 to about 5,000,000.

The α-olefin monomers can be polymerized in the presence of Ziegler-Natta (ZN) catalysts over a wide range of temperatures (e.g. 0° to 140°C, preferably 30° to 90°C). The polymerization can be done in bulk or in inert solvents. Suitable examples of inert solvents include, but are not limited to, the aliphatic, aromatic, and cycloaliphatic hydrocarbon solvents, i.e., pentane, hexane, heptane, benzene, toluene, cyclopentane, and cyclohexane. The amount of catalyst used is preferably in the range of 0.1 g to 5 g per kg of monomer, more preferably 0.2 to 3 g per kg of monomer, and most preferably, 0.5 to 2 g per kg of monomer. ZN catalysts are well known in the art and are disclosed, for example, in Odian, G., supra. and Boor, J., supra.

Analysis of polymers containing only $C_6$-$C_{10}$ α-olefin monomers and $C_2$-$C_5$ α-olefin monomers shows that the polymers are completely saturated.

Suitable photocrosslinking agents for use in the compositions of the invention, which are free of elemental sulfur, include but are not limited to: aldehydes, such as benzaldehyde, acetaldehyde, and their substituted derivatives; ketones such as acetophenone, benzophenone, and their substituted derivatives; quinones such as the benzoquinones, anthraquinone, and their substituted derivatives; thioxanthones such as 2-isopropylthioxanthone and 2-dodecylthioxanthone; and certain chromophore-substituted vinyl halomethyl-sym-triazines such as 2,4-bis-(trichloromethyl)-6-(3',4,-dimethoxyphenyl)-symtriazine. The concentration of photoactive crosslinking agent is in the range of 0.01 to 6.0% (by wt.), preferably 0.1 to 2% (by wt.), more preferably 0.5 to 1.5% (by wt.), of the polymer.

The α-olefin polymers of the present invention can be coated from solution by any coating processes well known in the art, such as knife coating, roll coating, gravure coating, curtain coating, etc. Useful coating thicknesses for the present invention are in the range of 0.5 to 15 mg/cm$^2$, preferably in the range of 2.0 to 7.0 mg/cm$^2$. Furthermore, some of the compositions of the invention can be applied by extrusion coating with no solvent present thereby eliminating environmental and toxicity problems associated with solution coating processes.

In addition, the adhesive composition can be cured using a source of actinic radiation of sufficient energy (i.e., wavelength range) to generate free radicals when incident upon the particular photoactive crosslinking agent selected for use in the composition. The preferred wavelength range for the photoactive crosslinking agents disclosed above is 400 to 250 nm. The radiant energy in this preferred range of wavelengths required to crosslink the adhesive film of the invention is 100 to 1500 mJ/cm$^2$, more preferably 200 to 800 mJ/cm$^2$. Additional details of the photocure process are disclosed in U.S. Patent Nos. 4,181,752 and 4,329,384.

The adhesive compositions of the present invention, with or without a photoactive crosslinking agent, may be cured by electron beam irradiation.

The crosslinked adhesive films preferably have a gel content in the range of from 2 to 95% (by wt.) more preferably from 30 to 80% (by wt.), most preferably from 50 to 70% (by wt.), when the gel content has been corrected for soluble tackifying resins and other additives as hereinafter described.

The addition of one or more tackifying resins to the saturated α-olefin polymers of the present invention can provide PSAs having improved tack, lower viscosity, improved coatability, good heat stability, and improved peel adhesion. Shear adhesion of the tackified compositions can be enhanced by radiation curing with no loss of peel adhesion. The resulting adhesives have the high internal or cohesive strength required for box sealing tape or masking tape applications.

Compatible tackifying resins useful in the radiation curable adhesive compositions of the present invention include resins derived by polymerization of $C_5$-$C_9$ unsaturated hydrocarbon monomers, polyterpenes, synthetic polyterpenes, and the like. Hydrocarbon tackifying resins can be prepared by polymerizing monomers consisting primarily of olefins and diolefins including, for example, residual by-product monomers of the isoprene manufacturing process. These hydrocarbon tackifying resins typically exhibit Ball and Ring Softening Points (ASTM D465-59) of about 80°C to 145°C, acid numbers of about 0 to 2, and saponification values of less than one.

Examples of such commercially available resins based on a $C_5$-$C_9$ olefin fraction of this type include Wingtack® 95, Wingtack® 115, and Wingtack® Plus tackifying resins (Goodyear Tire and Rubber Co.; Akron, OH). Other useful hydrocarbon resins include Regalrez® 1078 and Regalrez® 1126 resins (Hercules Chemical Co. Inc.; Wilmington, DE), Arkon resins such as Arkon® P115 (Arakawa Forest Chemical Industries; Chicago IL), and Escorez® resins (Exxon Chemical Co; Newark, NJ).

Other suitable resins include the terpene polymers, such as polymeric resinous materials obtained by polymerization and/or copolymerization of terpene hydrocarbons such as their mixtures, including carene, isomerized pinene, terpinene, terpentene, and various other terpenes. Commercially available resins of the terpene type include the Zonarez® B-series and 7000 series terpene (Arizona Chemical Corp.; Wayne, NJ). Typical properties reported for the Zonarez® terpene resins include Ball and Ring Softening of less than one and Saponification Numbers (ASTM D464-59) of less than one. The terpene resin used in examples below is a poly(beta-pinene) resin, Piccolyte® A115 (Hercules Chemical Co. Inc.), which has a Ball and Ring Softening Point of 115°C, an Acid Number 4 of one, and Iodine Number 4 of 190.

The tackifying resins may contain ethylenic unsaturation; however, saturated tackifying resins are preferred for those applications where oxidation resistance is important. Saturated tackifying resins such as Regalrez® 1078 and Arkon® P115 are preferred because they yield a higher gel content upon equivalent treatment by an activated crosslinking agent. The total amount of tackifying resins in the composition ranges from 0 to 150 parts, preferably 5 to 50 parts, and more preferably 25 to 35 pbw per 100 pbw of polymer.

Minor amounts of additives can also be included in the composition to provide adhesives for special end uses. Such additives may include pigments, dyes, plasticizers, fillers, stabilizers, ultraviolet absorbers, antioxidants, processing oils, and the like. Amount of additives used can vary from 0.1 to 50% (by wt.) depending on the end use desired.

The adhesive composition of the present invention can be coated onto a wide range of substrate materials, examples being polymer films such as polyethylene terephthalate (PET) and biaxially oriented polypropylene (BOPP); woven and non-woven fabrics; metals and metal foils such as aluminum, copper, lead, gold and the like; paper; glass; ceramics; and composite materials comprised of laminates of one or more of these materials.

The present invention provides a poly($\alpha$-olefin)- containing adhesive compositions that are radiation-curable to yield PSA adhesive films with an improved balance of peel adhesion and cohesive strength, especially at elevated temperatures. The peel adhesion and cohesive strength values are capable of being varied independently to achieve desired values. Adhesive films of the invention preferably have peel values in the range of 2 to 100 N/dm and shear values in the range of 1 to 10,000 or more minutes.

The present invention provides pressure-sensitive adhesives which have good cohesive strength at elevated temperatures. The PSA tapes of the invention are ideally suited for automotive masking tape applications and other tape applications requiring good cohesive strength at elevated temperatures and yet are readily removed from painted or other surfaces leaving no adhesive residue.

Another embodiment of the invention comprises a laminated structure of at least a first and a second substrate, the substrates being joined by a layer of the adhesive composition of the invention. At least one of the substrates is capable of transmitting actinic or electron beam radiation so that the adhesive film may be cured.

In some applications, primers may be useful for improving the adhesion of the adhesive to some substrates. Useful primers for the practice of the present invention include a triblock copolymer of styrene-ethylene/butylene-styrene grafted with maleic anhydride, alone and in combination with polypropylene (such as are described in U.S. Patent Nos. 4,386,135, 3,957,724, and 2,532,011). These form a special class of substrates on which the composition of the invention can be coated and subsequently radiation cured to form adhesive transfer films.

TEST METHODS:

The test procedures used in the examples to evaluate and compare the properties of the PSA compositions and tapes made from them are industry standard tests. These tests are described in detail in various publications of the American Society for Testing Materials (ASTM) (Philadelphia, PA) and the Pressure Sensitive Tape Council (PSTC) (Glenview, IL). References to these standards are also given.

Shear Strength (ASTM D-3654-78; PSTC-7)

Shear strength is a measure of the cohesiveness or internal strength of an adhesive. It is based upon the amount of force required to pull an adhesive strip from a standard flat surface in a direction parallel to the surface to which it has been affixed with a definite pressure. It is measured in units of time(minutes) required to pull a standard area of PSA coated sheet material from a stainless steel test panel under stress of a constant, standard load.

The tests were conducted on adhesive coated strips applied to a stainless steel panel such that a 12.7 mm by 12.7 mm portion of each strip was in firm contact with the panel with one end portion of the tape being free. The panel with coated strip attached was held in a rack such that the coated surface of the panel forms an angle of 182° with the vertical tape free end which is then tensioned by application of a force of one kilogram applied as a hanging weight from the free end of the coated strip. The 182° angle is used to negate peel forces thus insuring that only the shear forces are measured, thereby more accurately determining the holding power of the tape being tested. The time elapsed for each test specimen to separate from the steel panel is recorded as the shear strength.

Mode of Failure (MOF)

The time at which the mass falls is called "Shear Test" and is reported as "5000+" if the tape has not failed after 5000 minutes. With each Shear is indicated the mode of failure as follows:

po = pop-off, i.e., 75-100% adhesive failure from steelplate:
f = cohesive failure (both surfaces completely covered by adhesive);
The pop-off failure mode is preferred because it is indicative of adhesive failure of the adhesive/steel interfacial bond as opposed to cohesive failure of the adhesive. Adhesives of various shear adhesions, all within the range of the present invention (1 to 10,000 minutes), are preferred depending on end-use applications.

Two specimens of each tape were tested and the shear tests were averaged to obtain the shear value.

Peel Adhesion [ASTM D 3330-78: PSTC-1(11/75)]

Peel adhesion is the force required to remove a PSA-coated test specimen from a test panel measured at a specific angle and rate of removal. In the examples, this force is expressed in Newtons per decimeter (N/dm) width of coated sheet. The procedure followed is:

(1) A 25.4 mm x 150 mm test specimen was applied to a horizontally positioned clean glass test plate such that 12.7 mm of the specimen extended beyond the plate. A 2.3 kg rubber roller was rolled over the test specimen twice to insure good contact between the specimen and the test plate.
(2) The free end of the specimen is doubled back nearly touching itself so the angle of removal is 180°. The free end is attached to the adhesion tester scale.
(3) The glass test plate is clamped in the jaws of tensile testing machine which is capable of moving the plate away from the scale at a constant rate of 2.3 meters per minute.
(4) The scale reading in Newtons is noted as the tape is peeled from the glass surface, and the average, peak, and valley reading from the entire length of peeled tape specimen are recorded.

Inherent Viscosity [ASTM D 2857-70 (Reapproved 1977)]

In order to understand the benefits derived from the teaching of this invention, it is necessary to relate the improvements in shear strength and processability to the molecular weight of the PSA. The inherent viscosity of 10 ml sample of a 0.5 g/dl solution of the sample in toluene is measured using a Cannon-Fenske #50 viscometer in a water bath controlled at 25°C. The solvent used is specified in the examples.

Percent Gel Test [ASTM D 3616-82]

The percent gel is used as an indication of cure level. The tapes containing tackifying resins are corrected to the actual percent gel. The corrected percent gel is 100 times the gelled mass divided by the total mass of material that is capable of forming a gelled network. Soluble materials such as tackifiers are subtracted out when determining the gel fraction.

Crosslinking by radiation improves the creep and shear resistance of pressure-sensitive adhesives.

Many important properties of crosslinked PSAs vary with the gel content. Hence, determination of the gel content provides a means for controlling the process and thereby raising the quality of the tape.

Extraction tests permit verification of the proper gel content of polyolefin PSAs and they also permit comparison between different crosslinked adhesives and their specific end uses.

Gel Content Determination

A square test specimen (3.81 cm x 3.81 cm) containing approximately 0.06 g of PSA is cut from the tape and placed in a 120-mesh stainless steel basket measuring approximately 4.4 x 4.4. x 1.3 cm. The contents are weighed to the nearest 0.1 mg and then immersed in a capped beaker containing sufficient toluene to cover the specimen. After extraction for 24 to 48 hours, the basket (containing the specimen) is removed, drained, and placed in an oven at 93°C. The basket and specimen are dried to a constant weight and the gel content is determined as follows:

$$\text{Extract \%} = \frac{\text{weight lost during extraction x 100}}{\text{weight of original specimen}}$$

Gel content = 100 - percent extract

The gel content of the adhesive was determined after correcting for the tackifier. (and backing for a tape construction).

Two specimens of each tape were tested and the results were averaged to obtain the gel content value.

Percent Residue Test

An aluminum panel painted with an automotive basecoat/clearcoat (BC/CC) acrylic enamel paint system or the automotive 50J® acrylic enamel paint (Ford Motor Co.; Detroit, Mi) is used as a test panel for the percent residue test.

Tapes are applied at room temperature to the test surface followed by rolling the test specimen with two passes of a 2 kg rubber-coated metal roller. After one hour in an air-circulating oven at either 121°C or 150°C, the tape is peeled back, while hot, at an angle of 135° at an approximate rate of 1.9 m/min across half of the panel. Thereafter, the test panel is allowed to cool to room temperature and the tape samples are peeled from the remainder of the test panel at an angle of 45° peel and a rate of approximately 1.9 m/min. The panel is then visually examined for any adhesive residue.

This invention is further illustrated by the following examples of preferred embodiments thereof, although it will be understood that these examples are included merely for purposes of illustration and are not intended to limit the scope of the invention unless otherwise specifically indicated.

Saturated α-olefin copolymers 1-Hexene/ethylene copolymer (S-1)

1-hexene (400 g, distilled and dried over molecular sieves) and 0.5 g Aluminum Activated Reduced $TiCl_3$, $AATiCl_3$, (Stauffer Chemical Co.; Hartford, CT) were placed into a clean, dry, 2-liter Parr autoclave, equipped with a stirrer in an argon filled glove bag. The autoclave was sealed in the glove bag. The sealed autoclave was placed in a shaker and 100 g of ethylene was pressured into autoclave followed by heating to 50°C. Diethylaluminum chloride (1.0 g) was injected into the autoclave through catalyst injector to initiate the polymerization. The molar ratio of Al to Ti in the catalyst was 2 to 1. Because the copolymerization was exothermic, the temperature of the reaction mixture increased to 90°C. The reaction was run for 45 min before 20 ml methanol was added to deactivate the catalyst. Excess methanol was added to precipitate the polymer, and the precipitated polymer washed twice with methanol. A tacky amorphous polymer was obtained in 68% conversion having an IV of 3.7 dl/gm in n-hexane and a $T_g$ of -32°C. $^{13}C$ NMR analysis indicated that the polymer contained 81 mole percent 1-hexene and 19 mole percent ethylene.

1-Hexene/propylene copolymer (S-2)

A reaction vessel equipped with a mechanical stirrer, reflux condenser, and temperature control was dried and filled with nitrogen. The vessel was charged with 400 g of 1-hexene, the temperature was adjusted to 25°C, and ultra high purity hydrogen bubbled in at a rate of about 60 ml/min. 2.2 ml of a 1.8 M solution of diethylaluminum chloride (Aldrich Chemical Co.; Milwaukee, WI) was added followed by the addition of 0.4 g $AATiCl_3$. Propylene was immediately bubbled into the reaction mixture at about 60 ml/min for 30 minutes. Methanol (20 ml) was added to terminate the polymerization and the polymer was precipitated in excess methanol to extract the catalyst residues. A tacky amorphous polymer was obtained in 72% conversion having an IV of 5.7 dl/gm in n-hexane and a $T_g$ of -32°C. $^{13}C$ NMR analysis indicated that the polymer contained 87 mole percent 1-hexene and 13 mole percent propylene.

1-Hexene/propylene copolymer (S-3)

The procedure used for the preparation of copolymer (S-2) was repeated except that the reaction vessel was charged with 1-hexene containing 12.6 percent of toluene. A tacky amorphous polymer (S-3) was obtained in 57% conversion having an IV of 4.7 dl/gm in n-hexane and a $T_g$ of -35°C. It contained 85 mole percent 1-hexene and 15 mole percent propylene.

1-Octene/ethylene copolymer (S-4)

The procedure used for the preparation of copolymer S-2 was repeated except that 1-hexene was replaced with 1-octene. A tacky amorphous polymer was obtained in 56% conversion having an IV of 4.2. dl/gm in n-hexane and a $T_g$ of -51°C. It contained 89 mole percent 1-octene and 11 mole percent ethylene.

1-Octene-propylene copolymer (S-5)

The procedure for the preparation of copolymer S-1 was repeated except that 1-hexene was replaced with 1-octene. A tacky amorphous polymer was obtained in 82% conversion having an IV of 3.8 dl/gm in n-hexane and a $T_g$ of -56°C. It contained 95 mole percent 1-octene and 5 mole percent propylene.

1-Decene-ethylene copolymer (S-6)

The procedure used for the preparation of copolymer S-1 was repeated except that 1-hexene was replaced with 1-decene. A tacky amorphous polymer was obtained in 65% conversion having an IV of 4.2 dl/gm in n-hexane and a $T_g$ of -45°C. It contained 91 mole percent 1-decene and 9 mole percent ethylene.

Examples 1-11

Pressure Sensitive Adhesives From Saturated Polyolefins

Blends of 100 parts of the saturated α-olefin-polymers (S1, S2, S3, S4, S5, and S6), with and without 33 phr (parts per 100 pbw) tackifier resin, 1.0 phr photoinitiator, and 0.25 phr Irganox™ 1010 antioxidant in toluene were knife coated to produce a dry adhesive coating thickness of 25 µm on a 51 µm biaxially-oriented poly(ethylene terephthalate) (PET) film. Each coating was dried for 5 minutes at 157°F (70°C) and cured by exposure to doses of from 300 to 1200 mJ/$cm^2$ from medium pressure mercury lamps. The compositions prepared and the test results obtained for each are recorded in Table I.

Comparative Examples C1, C2, C3, C4, C5 and C6

Comparative Examples C1, C2, C3, C4, C5 and C6 consisted of the saturated α-olefin-polymers (S1, S2, S3, S4, S5, and S6), as previously described, which were knife coated onto a 51 µm thick biaxially oriented PET film to produce dry PSA coatings having a nominal thickness of 25 µm. The coating conditions and subsequent test protocol was the same as described for Examples 1-11. In all cases, the comparative examples were prepared without tackifier and were also not irradiated.

TABLE I

Adhesive Compositions with Saturated Polyolefin

| Ex. No. | Saturated Components | Tackifier (phr) | UV Exposure mJ/cm² | Peel N/dm | Gel % | Shear Strength | | % Residue | |
|---|---|---|---|---|---|---|---|---|---|
| | | | | | | 25°(min) (failure mode) | 70° (min) | 121°C | 150°C |
| 1 | S-1(81%H[1], 19%E[2]) | 0 | 400 | 5 | 82 | >10,000 | nd[9] | 0 | 0 |
| 2 | S-1(81%H, 19%E) | a[6](25) | 400 | 22 | 76 | 9,700(c)[8] | nd | 0 | 1 |
| C1 | S-1(81%H, 19%E) | 0 | 0 | 9 | 0 | 155(c) | nd | 25 | 50 |
| 3 | S-2(87%H, 13%P[3]) | 0 | 800 | 4 | 92 | >10,000 | >10,000 | 1 | 2 |
| 4 | S-2(87%H, 13%P) | b[7](25) | 800 | 19 | 97 | >10,000 | >10,000 | 1 | 1 |
| C2 | S-2(87%H, 13%P) | 0 | 0 | 9 | 0 | 208(c) | <1 | 30 | 75 |
| 5 | S-3(85%H, 15%P) | 0 | 800 | 4 | 97 | >10,000 | >10,000 | - | - |
| 6 | S-3(85%H, 15%P) | b(25) | 800 | 12 | 66 | >10,000 | >10,000 | - | - |

| Ex. No. | Saturated Components | Tackifier (phr) | UV Exposure mJ/cm$^2$ | Peel N/dm | Gel % | Shear Strength 25°(min) (failure mode) | 70° (min) | % Residue 121°C | 150°C |
|---|---|---|---|---|---|---|---|---|---|
| C3 | S-3(85%H, 15%P) | 0 | 0 | 11 | 0 | 280(c) | <1 | - | - |
| 7 | S-4(89%O[4], 11%E) | 0 | 400 | 15 | 72 | 3,275(po)[10] | nd | 0 | 0 |
| 8 | S-4(89%O, 11%E) | a(25) | 400 | 38 | 68 | 6,400(po) | nd | 2 | 3 |
| C4 | S-4(89%O, 11%E) | 0 | 0 | 18 | 0 | 312(c) | nd | 25 | 60 |
| 9 | S-5(95%O, 5%P) | 0 | 400 | 19 | 84 | >10,000 | nd | 0 | 0 |
| 10 | S-5(95%O, 5%P) | a(25) | 400 | 45 | 79 | 8,400 | nd | 0 | 1 |
| C5 | S-5(95%O, 5%P) | 0 | 0 | 23 | 0 | 275(c) | nd | 35 | 50 |
| 11 | S-6(91%D[5],9%E) | 0 | 400 | 16 | 92 | 385(po) | nd | - | - |
| C6 | S-6(91%D,9%E) | 0 | 0 | 21 | 0 | 335(c) | nd | - | - |

[1]H - 1-hexene
[2]E - ethylene
[3]P - propylene
[4]O - 1-octene
[5]D - 1-decene
[6]a - tackifier resin is Regalrez™ 1126 (from Hercules Chem. Co.)
[7]b - tackifier resin is Arkon™ P-115 (from Hercules Chem. Co.)
[8]c - cohesive failure
[9]nd - not determined
[10]po - pop off

The data in Table I indicate that saturated polyolefins prepared from 1-hexene, and 1-octene having from 5 to 19% ethylene or propylene and containing either zero or 33 parts of tackifier per 100 parts of polyolefin provide tapes having excellent shear at 25° when exposed to UV radiation. In addition, the saturated polyolefins leave no or less than 5% residue in the Percent Residue test. Tapes prepared from the polyolefins of the comparative examples leave at least 25% or more adhesive residue in the test.

## Claims

**1.** A radiation curable adhesive composition comprising:

(a) a saturated $\alpha$-olefin polymer comprising the polymerization product of from 80 to 99 mole percent of one or more $C_6$ to $C_{10}$ $\alpha$-olefin monomers and from 1 to 20 mole percent of one or more $C_2$ to $C_5$ $\alpha$-olefin monomers; and
(b) 0.01 to 6.0% by weight of a photoactive crosslinking agent to crosslink the composition upon irradiation from a source of actinic radiation,

said composition being a pressure sensitive adhesive both before and after crosslinking.

**2.** The composition of claim 1 wherein the $\alpha$-olefin polymer has the general formula :

$$(M^1)_x\text{-}(M^2)_y \qquad \text{I}$$

wherein

x and y are numbers designating the relative molar amounts of $M^1$ and $M^2$ that are randomly located in the backbone chain of the polymer such that the polymer has a weight average molecular weight of at least 150,000, x is from 80 up to 99 mole percent of the sum (x+y) and y is from 1 up to 20 mole percent of the sum (x+y).
$M^1$ is an ethanediyl repeating unit having a pendent hydrocarbyl group having 4 to 8 carbon atoms;
$M^2$ is an ethanediyl repeating unit different from $M^1$, selected from ethylene and units having a pendent hydrocarbyl group selected from linear and branched alkyl groups having 1 to 3 carbon atoms.

**3.** The composition of Claim 2 wherein said $\alpha$-olefin polymer has the general formula:

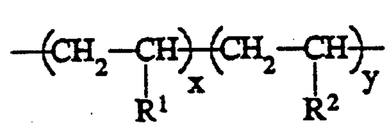

wherein:

$R^1$ is an alkyl group having 4 to 8 carbon atoms;
$R^2$ is hydrogen or a hydrocarbyl group selected from alkyl groups having 1 to 3 carbon atoms; and
x and y are numbers designating the relative molar amounts of monomer units comprising the backbone of the polymer such that the α-olefin polymers have a weight average molecular weight of 150,000 to 5,000,000, x being 80 to99 mole percent of the sum (x+y) and y being 1 to 20 mole percent of the sum (x+y).

**4.** The composition of claims 1 to 3 wherein said photoactive cross-linking agent is selected from the group consisting of aldehydes, ketones, quinones, thioxanthones and s-triazines.

**5.** The composition of claims 1 to 4 further comprising a tackifying resin.

**6.** The composition of claims 1 to 5 further comprising an effective amount of at least one additive selected from the group consisting of pigments, dyes, fillers, plasticizers, stabilizers, ultraviolet absorbers antioxidants and processing oils.

**7.** The composition of claims 1 to 6 wherein said composition has been crosslinked.

**8.** An article comprising the adhesive composition of claims 1 to 7 coated on a substrate, said composition optionally being crosslinked.

**9.** A method of preparing a crosslinked copolymer comprising the steps:

a. polymerizing an admixture comprising one or more $C_6$-$C_{10}$ α-olefin monomers and one or more $C_2$-$C_5$ α-olefin monomers; and
b. adding 0.01 to 6.0 % by weight of a photoactive crosslinking agent and subjecting the resulting copolymer from step a. to radiation to provide a crosslinked polymer,

said crosslinked copolymer comprising 80 to 99 mole percent $C_6$-$C_{10}$ α-olefin repeating units and 1 to 20 mole percent $C_2$-$C_5$ α-olefin repeating units.

**10.** The method of claim 9 wherein said admixture to be polymerized further comprises a Ziegler-Natta catalyst.

## Patentansprüche

**1.** Durch Strahlung härtbarer Klebstoff, umfassend:

(a) ein gesättigtes α-Olefin-Polymer, umfassend das Polymerisationsprodukt von 80 bis 99 Mol-% eines oder mehrerer $C_6$-$C_{10}$-α-Olefin-Monomere und 1 bis 20 Mol.-% eines oder mehrerer $C_2$-$C_5$-α-Olefin-Monomere und
(b) 0,01 bis 6,0 Gew.-% eines photoaktiven Vernetzungsmittels, damit die Masse bei der Bestrahlung aus einer Quelle für photochemisch wirksame Strahlen vernetzt, wobei die Masse sowohl vor als auch nach dem Vernetzen ein Haftkleber ist.

**2.** Masse nach Anspruch 1, wobei das α-Olefin-Polymer die allgemeine Formel:

$$(M^1)_x\text{-}(M^2)y \qquad \text{I}$$

hat, worin

x und y Zahlen sind, die die relativen molaren Mengen von $M^1$ und $M^2$ angeben, die regellos in der Hauptkette des Polymers angeordnet sind, so daß das Polymer ein Gewichtsmittel des Molekulargewichts von mindestens 150.000 hat; wobei x 80 bis 99 Mol-% der Summe von (x+y) und y 1 bis 20 Mol-% der Summe von (x+y) darstellen,
$M^1$ eine sich wiederholende Ethandiyl-Einheit mit einem anhängenden Kohlenwasserstoffrest mit 4 bis 8 Kohlenstoffatomen ist,
$M^2$ eine sich wiederholende Ethandiyl-Einheit ist, die von $M^1$ verschieden und aus Ethylen-Einheiten oder

Einheiten mit einem anhängendem Kohlenwasserstoffrest gewählt ist, der aus linearen und verzweigten Alkylresten mit 1 bis 3 Kohlenstoffatomen gewählt ist.

**3.** Masse nach Anspruch 2, wobei das α-Olefin-Polymer die allgemeine Formel:

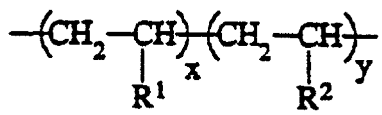

hat, worin

$R^1$ ein Alkylrest mit 4 bis 8 Kohlenstoffatomen ist;
$R^2$ ein Wasserstoffatom oder ein Kohlenwasserstoffrest, gewählt aus Alkylresten mit 1 bis 3 Kohlenstoffatomen ist; und
x und y Zahlen sind, die die relativen molaren Mengen der Monomereinheiten angeben, die das Grundgerüst des Polymers umfassen, so daß die α-Olefin-Polymere ein Gewichtsmittel des Molekulargewichts von 150.000 bis 5.000.000 haben, wobei x 80 bis 99 Mol-% der Summe von (x+y) und y 1 bis 20 Mol-% der Summe von (x+y) darstellen.

**4.** Masse nach Anspruch 1 bis 3, wobei das photoaktive Vernetzungsmittel aus der Gruppe der Aldehyde, Ketone, Chinone, Thioxanthone und s-Triazine gewählt ist.

**5.** Masse nach Anspruch 1 bis 4, umfassend außerdem ein klebrigmachendes Harz.

**6.** Masse nach Anspruch 1 bis 5, umfassend außerdem eine wirksame Menge von mindestens einem Zusatz, gewählt aus der Gruppe der Pigmente, Farbstoffe, Füllstoffe, Weichmacher, Stabilisatoren, UV-Absorptionsmittel, Antioxidantien und Verfahrensöle.

**7.** Masse nach Anspruch 1 bis 6, wobei die Masse vernetzt ist.

**8.** Gegenstand, umfassend den Klebstoff nach Anspruch 1 bis 7 auf einem Träger aufgebracht, wobei die Masse gegebenenfalls vernetzt ist.

**9.** Verfahren zur Herstellung eines vernetzten Copolymers, umfassend die Schritte:

a. Polymerisieren eines Gemischs, umfassend ein oder mehrere $C_6$-$C_{10}$-α-Olefin-Monomere und ein oder mehrere $C_2$-$C_5$-α-Olefin-Monomere; und
b. Zugeben von 0,01 bis 6,0 Gew.-% eines photoaktiven Vernetzungsmittels und Bestrahlen des im Schritt a. erzeugten Copolymers, wodurch ein vernetztes Polymer bereitgestellt wird,

wobei das vernetzte Copolymer 80 bis 99 Mol-% sich wiederholende $C_6$-$C_{10}$-α-Olefin-Einheiten und 1 bis 20 Mol-% sich wiederholende $C_2$-$C_5$-α-Olefin-Einheiten umfaßt.

**10.** Verfahren nach Anspruch 9, wobei das zu polymerisierende Gemisch außerdem einen Ziegler-Natta-Katalysator umfaßt.

## Revendications

**1.** Composition adhésive durcissable par rayonnement comprenant :

a) un polymère d'α-oléfine saturé comprenant un produit de polymérisation de 80 à 99 % molaire, d'un ou plusieurs monomères d'α-oléfine en $C_6$ à $C_{10}$ et de 1 à 20% molaire d'un ou plusieurs monomères d'α-oléfines en $C_2$ à $C_5$ ; et
b) de 0,01 à 6,0% en poids d'un agent réticulant photoactif pour réticuler la composition lors d'une irradiation à partir d'une source de rayonnement actinique,

ladite composition étant un adhésif sensible à la pression avant et après réticulation.

**2.** Composition de la revendication 1 dans laquelle le polymère d'α-oléfine a la formule générale

$$(M^1)_x - (M^2)_y \qquad I$$

dans laquelle

x et y sont des nombres désignant les quantités molaires relatives de $M^1$ et $M^2$ qui sont situées de manière aléatoire dans la chaîne d'ossature du polymère de façon que le polymère ait un poids moléculaire moyen en poids d'au moins 150 000,
x représentant de 80 à 99% molaire de la somme (x + y) et y représentant de 1 à 20% molaire de la somme (x + y) ;
$M^1$ est un motif éthanediyle, ayant un groupe hydrocarbyle pendant de 4 à 8 atomes de carbone ;
$M^2$ est un motif éthanediyle différent de $M^1$, choisi parmi l'éthylène ou des unités ayant un groupe hydrocarbyle pendant choisi parmi les groupes alkyles linéaires et ramifiés ayant de 1 à 3 atomes de carbone.

**3.** Composition selon la revendication 2 dans laquelle ledit polymère d'α-oléfine a la formule générale :

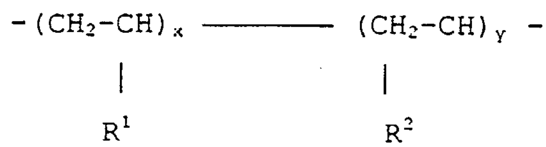

dans laquelle

$R^1$ est un groupe alkyle ayant de 4 à 8 atomes de carbone ;
$R^2$ est un hydrogène ou un groupe hydrocarbyle choisi parmi les groupes alkyles ayant de 1 à 3 atomes de carbone ; et
x et y sont des nombres désignant les quantités molaires relatives d'unités monomères comprenant la chaîne d'ossature du polymère de manière que les polymères d'a-oléfine aient un poids moléculaire moyen en poids de 150 000 à 5 millions;
x représente de 80 à 99 % molaire de la somme de (x + y) et y représente de 1 à 20 % molaire de la somme (x + y).

**4.** Composition des revendications 1 à 3 dans laquelle ledit agent réticulant photoactif est choisi dans le groupe constitué par les aldéhydes, les cétones, les quinones, les thioxanthones et les s-triazines.

**5.** Composition des revendications 1 à 4 comprenant en outre une résine collante.

**6.** Composition des revendications 1 à 5 comprenant en outre une quantité efficace d'au moins un additif choisi dans le groupe constitué par les pigments, les colorants, les charges, les plastifiants, les stabilisateurs, les absorbants d'ultra-violets, les anti-oxydants et les huiles de traitement.

**7.** Composition des revendications 1 à 6, dans laquelle ladite composition a été réticulée.

**8.** Article comprenant la composition adhésive des revendications 1 à 7 déposée sur un substrat, ladite composition étant facultativement réticulée.

**9.** Procédé de préparation d'un copolymère réticulé comprenant les étapes de :

a) polymérisation d'un mélange comprenant un ou plusieurs monomères d'α-oléfine en $C_6$ à $C_{10}$ et un ou plusieurs monomères d'α-oléfine en $C_2$ à $C_5$ ; et
b) addition de 0,01 à 6,0% en poids d'un agent réticulant photoactif et soumission du copolymère résultant de

l'étape a à un rayonnement pour fournir un polymère réticulé ;

ledit copolymère réticulé comprenant de 80 à 99% molaire de motifs α-oléfine en $C_6$ à $C_{10}$ et de 1 à 20% molaire de motifs α-oléfine en $C_2$ à $C_5$.

**10.** Procédé de la revendication 9 dans lequel ledit mélange à polymériser comprend en outre un catalyseur de Ziegler-Natta.